# FASCICULE DE BREVET EUROPEEN

(11) **EP 3 273 286 B1**
(45) Date de publication et mention de la délivrance du brevet: **13.03.2024**
(21) Numéro de dépôt: 17182374.3
(22) Date de dépôt: 20.07.2017
(51) Int. Cl.: G02B 27/10, G02B 27/14, G02B 27/01, G02B 26/10

(54) **AFFICHEUR TÊTE-HAUTE**
HEAD-UP-DISPLAY
HEAD-UP DISPLAY

(30) Priorité: 22.07.2016 FR 1657044
(43) Date de publication de la demande: 24.01.2018
(73) Titulaire: Valeo Comfort and Driving Assistance, 94000 Créteil (FR)
(72) Inventeur: MERMILLOD, Pierre, 94046 Créteil Cedex (FR); GRANDCLERC, François, 94046 Créteil Cedex (FR)
(74) Mandataire: Delplanque, Arnaud

(56) Documents cités:
- WO-A1-2015/174048
- JP-A- H06 138 409
- JP-A- 2003 161 906
- US-B1- 9 244 275

## Description

### DOMAINE TECHNIQUE AUQUEL SE RAPPORTE L'INVENTION

La présente invention concerne de manière générale les dispositifs d'aide à la conduite de véhicules automobiles.

Elle concerne plus particulièrement un afficheur tête-haute pour véhicule automobile, comportant :
- une première unité de génération d'images commandée par un calculateur pour générer des premières images,
- une seconde unité de génération d'images, distincte de la première unité de génération d'images et commandée par un calculateur pour générer des secondes images, et
- un ensemble optique de projection d'images, qui est adapté à projeter concomitamment les premières et secondes images dans le champ de vision du conducteur du véhicule automobile, et qui comporte un miroir partiellement réfléchissant, de part et d'autre duquel sont placées les première et seconde unités de génération d'images.

### ARRIERE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute, adapté à projeter des informations (vitesse du véhicule, direction à suivre, dysfonctionnement du moteur, présence d'obstacle, ...) à la hauteur du regard du conducteur.

On connaît notamment deux types d'afficheurs tête-haute.

Les afficheurs du premier type, appelés scanner laser, utilisent un dispositif de formation d'images comprenant un diffuseur et une unité de balayage conçue pour générer un faisceau lumineux balayant une face d'entrée du diffuseur. Le faisceau lumineux en sortie du diffuseur forme ainsi une image, qui peut alors être projetée dans le champ de vision du conducteur du véhicule.

Les afficheurs du second type utilisent un écran qui permet de générer une image, laquelle est alors projetée dans le champ de vision du conducteur.

On connaît par ailleurs du document WO2013189808 un afficheur tête-haute tel que défini en introduction. Dans cet afficheur, il est prévu deux unités de génération d'images qui sont placées à des distances différentes d'un miroir semi-réfléchissant, si bien que les images qu'elles génèrent sont vues par le conducteur à des distances différentes.

L'inconvénient majeur de ce dispositif est que, parce que tant le miroir que les unités de génération d'images ne sont pas parfaites, les deux images se brouillent quelque peu l'une par rapport à l'autre.

Un autre exemple d'un afficheur tête-haute est décrit dans US 9 244 275 B1.

### OBJET DE L'INVENTION

Afin de remédier à l'inconvénient précité de l'état de la technique, la présente invention propose un afficheur tête-haute selon la revendication 1. Dans cet afficheur tête-haute le miroir est un filtre optique spectralement sélectif adapté à majoritairement réfléchir la lumière dans au moins une première longueur d'onde, et à majoritairement transmettre la lumière dans au moins une seconde longueur d'onde distincte de ladite première longueur d'onde.

Ainsi, à titre d'exemple, le filtre optique spectralement sélectif permet de réfléchir vers le combineur la lumière émise par la première unité de génération d'images dans ladite première longueur d'onde, et de transmettre vers le combineur la lumière émise par la seconde unité de génération d'images dans ladite seconde longueur d'onde.

De cette manière, le filtre optique spectralement sélectif permet de filtrer les images générées par les deux unités de génération d'images, de telle sorte que ces images ne comportent pas de défaut qui se superposent et qui réduisent la lisibilité des informations projetées dans le champ de vision du conducteur.

La première unité de génération d'images comprend au moins une source lumineuse monochromatique, laquelle émet uniquement dans ladite première ou respectivement dans ladite seconde longueur d'onde, la deuxième unité de génération d'images est adaptée à générer un faisceau lumineux dans une bande de longueurs d'onde qui comprend ladite seconde ou respectivement ladite première longueur d'onde, et ledit filtre optique spectralement sélectif est adapté à transmettre, ou respectivement réfléchir, la lumière dans une majeure partie de ladite bande de longueurs d'onde.

Ladite première unité de génération d'images est un scanner laser qui comprend au moins une diode laser émettant une longueur d'onde comprise dans la bande de longueurs d'onde.

D'autres caractéristiques avantageuses et non limitatives de l'afficheur tête-haute conforme à l'invention sont les suivantes : 11
- le scanner laser comprend trois diodes laser adaptées à émettre dans trois longueurs d'onde distinctes, dont ladite première ou respectivement seconde longueur d'onde ;
- ladite deuxième unité de génération d'images comprend un écran d'affichage ;
- ledit filtre optique spectralement sélectif est un miroir dichroïque ;
- ledit filtre optique spectralement sélectif présente, pour ladite première longueur d'onde, un coefficient de réflexion supérieur ou égal à 90%, de préférence supérieur à 95%, au mieux supérieur à 99% ;
- ledit filtre optique spectralement sélectif présente, pour ladite seconde longueur d'onde, un coefficient de transmission supérieur ou égal à 90%, de préférence supérieur à 95%, au mieux supérieur à 99% ;
- les première et seconde unités de génération d'images sont placées par rapport au filtre optique spectralement sélectif de telle sorte que lesdites premières et deuxièmes images sont formées dans un seul et même plan-image ; ou
- les première et seconde unités de génération d'images sont placées par rapport au filtre optique spectralement sélectif de telle sorte que lesdites premières et deuxièmes images sont formées dans deux plans-images distincts.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un afficheur tête-haute conforme à l'invention ; et
- la figure 2 est une vue schématique d'une variante de réalisation de l'afficheur tête-haute de la figure 1.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

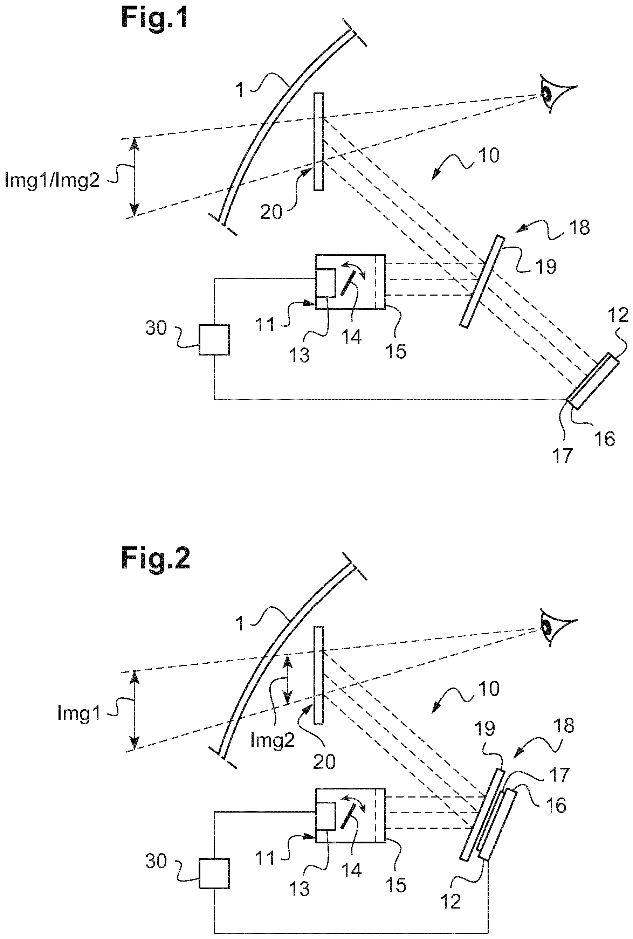

Sur la figure 1, on a représenté un afficheur tête-haute 10 équipant un véhicule automobile.

Cet afficheur tête-haute 10 comprend deux unités de génération d'image 11, 12 pilotées par un calculateur 30, et un ensemble optique de projection 18.

L'ensemble optique de projection 18 est conçu pour projeter les images émises par les deux unités de génération d'image 11, 12 dans le champ de vision du conducteur.

Il comporte à cet effet un miroir partiellement réfléchissant, de part et d'autre duquel sont placées les deux unités de génération d'image 11, 12, de telle sorte que ses deux faces sont respectivement éclairées par les faisceaux émis par les deux unités de génération d'image 11, 12.

Selon l'invention, ce miroir est un filtre optique spectralement sélectif 19, adapté à majoritairement réfléchir la lumière dans au moins une première longueur d'onde λ₁, et à majoritairement transmettre la lumière dans au moins une seconde longueur d'onde λ₄ distincte de ladite première longueur d'onde λ₁.

En pratique, ce filtre optique spectralement sélectif 19 sera ici conçu pour réfléchir la lumière dans un nombre fini de longueurs d'onde λ₁, λ₂, λ₃, et à transmettre la lumière dans plusieurs bandes de longueurs d'onde Δλ qui ne comprennent pas ces longueurs d'onde λ₁, λ₂, λ₃ (λ₄ étant alors une longueur d'onde quelconque appartenant à l'une de ces bandes de longueurs d'onde Δλ).

Pour bien comprendre l'invention, on peut décrire plus en détail le mode de réalisation de l'afficheur tête-haute 1 représenté sur la figure 1.

Dans ce mode de réalisation, la première unité de génération d'image 11 est du type « émissif ». Elle comprend un diffuseur 15 et une unité de balayage qui génère un faisceau lumineux de direction variable de manière à pouvoir balayer la face arrière du diffuseur 15. L'unité de balayage comprend plus précisément un module de formation de faisceau 13 et un ou plusieurs miroir(s) mobile(s) 14, par exemple réalisé sous forme d'un microsystème électromécanique (ou MEMS pour "*MicroElectroMechanical System*").

Le module de formation de faisceau 13 pourrait comprendre une unique source de lumière monochromatique.

Toutefois, de manière à pouvoir générer des images en couleur, il comprend préférentiellement trois sources de lumière monochromatique, ici des diodes laser émettant dans trois couleurs distinctes. Il comprend ainsi plus précisément :
- une diode laser rouge émettant à une longueur d'onde λ₁ de 650 nm (en pratique dans une bande de couleur très étroite, de moins de 10nm de large),
- une diode laser verte émettant à une longueur d'onde λ₂ de 570 nm (en pratique dans une bande de couleur très étroite, de moins de 10nm de large), et
- une diode laser bleu émettant à une longueur d'onde λ₃ de 470 nm (en pratique dans une bande de couleur très étroite, de moins de 10nm de large).

Les faisceaux lumineux respectifs de ces trois diodes laser (monochromatiques) sont combinés (par exemple à l'aide de miroirs partiellement réfléchissant) afin de former un unique faisceau lumineux polychromatique (ici laser) émis en sortie du module de formation de faisceau 13. Ce faisceau lumineux généré par le module de formation de faisceau 13 est dirigé vers le (ou les) miroir mobile 14, dont l'orientation est commandée par un module de commande de façon à ce que le faisceau lumineux réfléchi balaie la face arrière du diffuseur 15.

La seconde unité de génération d'image 12 est du type « à modulation de lumière ». Elle comprend un écran 17, ici un écran à cristaux liquides (ou LCD pour "*Liquid Crystal Display*") à transistors en couche mince (ou TFT pour "*Thin-Film Transistor*"). Elle comprend également ici un dispositif de rétroéclairage 16 situé à l'arrière de l'écran 17. Ce dispositif de rétroéclairage 16 comporte une pluralité de diodes électroluminescentes réparties derrière les cristaux liquides de l'écran 17.

Ces diodes électroluminescentes sont ici conçues pour émettre une lumière blanche. De cette manière, la seconde unité de génération d'image 12 est adaptée à émettre de la lumière dans une grande bande de longueurs d'onde, par exemple comprise entre 400 et 800 nm.

On pourra ici noter que cette bande de longueurs d'onde comprend les trois longueurs d'onde λ₁, λ₂, λ₃.

Les deux unités de génération d'images 11, 12 permettent, sous le contrôle du calculateur 30, de générer deux images Img1, Img2 distinctes que l'ensemble optique de projection 18 va pouvoir projeter dans le champ de vision du conducteur lorsque le regard de ce dernier est tourné vers la route.

L'ensemble optique de projection 18 est plus précisément conçu pour projeter les deux images Img1, Img2 virtuelles dans le champ de vision du conducteur du véhicule, à une distance du conducteur qui est supérieure à celle séparant le conducteur du pare-brise 1 (si bien que les yeux du conducteur n'ont pas à effectuer de travail d'accommodation pour percevoir les informations projetées).

L'ensemble optique de projection 18 comporte à cet effet un combineur 20 placé dans le champ de vision du conducteur du véhicule.

Ici, ce combineur 20 est formé par une lame partiellement réfléchissante (communément appelée lame semi-réfléchissante) qui est disposée dans l'habitacle du véhicule automobile, entre le pare-brise 1 du véhicule et les yeux du conducteur, et qui est incurvée de manière à agrandir la taille des images générées par les deux unités de génération d'images 11, 12. En variante, le combineur pourrait être formé par le pare-brise lui-même.

L'ensemble optique de projection 18 comporte également le filtre optique spectralement sélectif 19, qui permet de diriger les images générées par les deux unités de génération d'images 11, 12 vers le combineur 20.

Bien que ce ne soit pas ici le cas, il pourrait éventuellement aussi comporter un ou plusieurs autre(s) miroir(s), dit(s) de repliement.

Ici, le filtre optique spectralement sélectif est un miroir dichroïque 19 qui est adapté à :
- réfléchir la lumière autour des trois longueurs d'onde λ₁, λ₂, λ₃ (c'est-à-dire dans des bandes de longueurs d'onde centrées sur les trois longueurs d'onde λ₁, λ₂, λ₃ et de largeur très étroites, inférieure à 10 nm, ici considérée égale à 2 nm), et
- transmettre la lumière dans le reste du domaine visible (par exemple dans les bandes de longueurs d'onde Δλ comprises entre 400 et 469 nm, entre 471 et 569 nm, entre 571 et 649 nm, et entre 651 et 800 nm).

Ce miroir dichroïque 19 sera de préférence choisi de telle manière que, pour chacune des trois longueurs d'onde λ₁, λ₂, λ₃, il présente un coefficient de réflexion supérieur ou égal à 90%. Ce coefficient sera de préférence supérieur à 95%. Pour obtenir les meilleurs résultats, ce coefficient sera compris entre 99% et 100%.

Le miroir dichroïque 19 sera également préférentiellement choisi de telle manière que, dans chacune des quatre bandes de longueurs d'onde Δλ, il présente un coefficient de transmission supérieur ou égal à 90%. Ce coefficient sera de préférence supérieur à 95%. Pour obtenir les meilleurs résultats, ce coefficient sera compris entre 99% et 100%.

On comprend ainsi que grâce à ce miroir dichroïque 19, la lumière émise par la première unité de génération d'images 11 sera presqu'intégralement réfléchie vers le combineur 20. La lumière émise par la seconde unité de génération d'images 12 sera elle aussi presqu'intégralement transmise vers le combineur 20, excepté autour des trois longueurs d'onde λ₁, λ₂, λ₃.

Dans le mode de réalisation représenté sur la figure 1, les première et seconde unités de génération d'images 11, 12 sont placées par rapport au miroir dichroïque 19 de telle sorte que les images Img1, Img2 qu'elles génèrent se forment dans un seul et même plan-image.

Pour cela, l'écran 17 et le diffuseur 15 sont placés dans deux plans situés à égales distances du miroir dichroïque 19, de part et d'autre de ce dernier.

Ici, l'écran 17 et le diffuseur 15 sont centrés sur deux axes qui se coupent au niveau du miroir dichroïque 19. De cette manière, les images Img1, Img2 générées par les première et seconde unités de génération d'images 11, 12 se superposent bien.

Un exemple d'utilisation de cet afficheur tête-haute 10 consistera alors à commander l'affichage d'images au moyen de l'une des unités de génération d'images 11, 12 puis, en cas de panne détectée sur cette unité de génération d'images 11, 12, à commander l'affichage d'images au moyen de l'autre des unités de génération d'images.

En variante, on pourrait décaler latéralement l'écran 17 et le diffuseur 15 de manière qu'ils soient centrés sur deux axes qui ne se coupent pas. Ainsi, les images Img1, Img2 générées par les première et seconde unités de génération d'images 11, 12 se trouveraient décalées latéralement l'une par rapport à l'autre (toujours dans le même plan-image).

Dans cette variante, les deux unités de génération d'images 11, 12 pourront être utilisées de manière concomitante, pour afficher des informations différentes.

Selon une autre variante de réalisation de l'afficheur tête-haute 10 représentée sur la figure 2, les première et seconde unités de génération d'images 11, 12 pourraient être placées par rapport au miroir dichroïque 19 de telle sorte que les images Img1, Img2 générées par les première et seconde unités de génération d'images 11, 12 se forment dans deux plans-images disctincts, situés à des distances différentes du conducteur du véhicule automobile.

Dans cette variante, les deux unités de génération d'images 11, 12 pourront être utilisées de manière concomitante, pour afficher des informations distinctes, à des distances différentes du conducteur.

Il sera ainsi par exemple possible d'afficher en continu des premières informations dans un premier plan-image situé à une grande distance du conducteur (vitesse, direction à suivre, ...), et d'afficher épisodiquement des informations de sécurité dans un second plan-image situé à une distance plus restreinte du conducteur (problème moteur, danger détecté, ...).

Comme cela a été exposé supra, les deux unités de génération d'images 11, 12 sont pilotées par un calculateur 30, que l'on pourra maintenant décrire plus en détail.

On précisera au préalable que si ici un seul et même calculateur 30 pilotera ici les deux unités de génération d'images 11, 12, ces dernières pourraient en variante être pilotées chacune par un calculateur qui leur serait propre.

Ici, le calculateur comporte classiquement un processeur (CPU), une mémoire vive (RAM), une mémoire morte (ROM), et différentes interfaces d'entrée et de sortie.

Grâce à ses interfaces d'entrée, le calculateur 30 peut recevoir des signaux d'entrée, tels que des images à générer. Ces images seront élaborées de telle sorte que les informations qu'elles comportent ne se superposent pas.

Grâce à sa mémoire morte, le calculateur 30 mémorise des données utiles dans le cadre du pilotage des deux unités de génération d'images 11, 12.

Enfin, grâce à ses interfaces de sortie, le calculateur 30 transmet des signaux de commande aux unités de génération d'images 11, 12 de manière qu'elles génèrent les images souhaitées.

La présente invention n'est nullement limitée au mode de réalisation décrit et représenté, mais l'homme du métier saura y apporter toute variante conforme à l'invention.

En particulier, on pourrait prévoir que l'écran 17 comporte des filtres colorés centrés autour des longueurs d'onde λ₁, λ₂, λ₃.

Selon une autre variante de l'invention, les première et seconde unités de génération d'images 11, 12 pourraient être inversées par rapport au miroir dichroïque 19, auquel cas ce dernier serait prévu pour réfléchir la lumière dans les bandes de longueurs d'onde Δλ et pour transmettre la lumière autour des longueurs d'onde λ₁, λ₂, λ₃.

Selon une autre variante, ne faisant pas partie de l'invention, les deux unités de génération d'images pourraient être formées par des écrans d'affichage, situés de part et d'autre du filtre dichroïque. Cette variante ne permettrait toutefois pas de tirer partie, comme c'est le cas dans le mode de réalisation représenté sur les figures, de la combinaison avantageuse des propriétés de la lumière laser et du miroir dichroïque.

Encore en variante, ne faisant pas partie de l'invention, les deux unités de génération d'images pourraient être formées par des scanners laser, situés de part et d'autre du filtre dichroïque.

## Revendications

1. Afficheur tête-haute (10) pour véhicule automobile, comportant :
- une première unité de génération d'images (11) commandée par un calculateur (30) pour générer des premières images (Img1),
- une seconde unité de génération d'images (12), distincte de la première unité de génération d'images (11) et commandée par un calculateur (30) pour générer des secondes images (Img2), et
- un ensemble optique (18) de projection d'images, qui est adapté à projeter concomitamment les premières et secondes images (Img1, Img2) dans le champ de vision du conducteur du véhicule automobile et qui comporte un miroir partiellement réfléchissant, de part et d'autre duquel sont placées les première et seconde unités de génération d'images (11, 12),
dans lequel ledit miroir est un filtre optique spectralement sélectif (19) adapté à majoritairement réfléchir la lumière dans au moins une première longueur d'onde (λ₁), et à majoritairement transmettre la lumière dans au moins une seconde longueur d'onde (λ₄) distincte de ladite première longueur d'onde (λ₁), et dans lequel :
- la première unité de génération d'images (11) comprend au moins une source lumineuse monochromatique (13), laquelle émet uniquement dans ladite première ou respectivement dans ladite seconde longueur d'onde (λ₁, λ₄),
- la deuxième unité de génération d'images (12) est adaptée à générer un faisceau lumineux dans une bande de longueurs d'onde (Δλ) qui comprend ladite seconde ou respectivement ladite première longueur d'onde (λ₁, λ₄), et
- ledit filtre optique spectralement sélectif (19) est adapté à transmettre, ou respectivement réfléchir, la lumière dans une majeure partie de ladite bande de longueurs d'onde (Δλ)
et dans lequel ladite première unité de génération d'images (11) est un scanner laser qui comprend au moins une diode laser émettant une longueur d'onde (λ₁, λ₄) comprise dans la bande de longueurs d'onde (Δλ).

2. Afficheur tête-haute (10) selon la revendication précédente, dans lequel le scanner laser comprend trois diodes laser adaptées à émettre dans trois longueurs d'onde (λ₁, λ₂, λ₃) distinctes, dont ladite première ou respectivement seconde longueur d'onde (λ₁, λ₄).

3. Afficheur tête-haute (10) selon l'une des revendications précédentes, dans lequel ladite deuxième unité de génération d'images (12) comprend un écran d'affichage.

4. Afficheur tête-haute (10) selon l'une des revendications précédentes, dans lequel ledit filtre optique spectralement sélectif (19) est un miroir dichroïque.

5. Afficheur tête-haute (10) selon l'une des revendications précédentes, dans lequel ledit filtre optique spectralement sélectif (19) présente, pour ladite première longueur d'onde (λ₁), un coefficient de réflexion supérieur ou égal à 90%, de préférence supérieur à 95%, au mieux supérieur à 99%.

6. Afficheur tête-haute (10) selon l'une des revendications précédentes, dans lequel ledit filtre optique spectralement sélectif (19) présente, pour ladite seconde longueur d'onde (λ₄), un coefficient de transmission supérieur ou égal à 90%, de préférence supérieur à 95%, au mieux supérieur à 99%.

7. Afficheur tête-haute (10) selon l'une des revendications précédentes, dans lequel les première et seconde unités de génération d'images (11, 12) sont placées par rapport au filtre optique spectralement sélectif (19) de telle sorte que lesdites premières et deuxièmes images (Img1, Img2) sont formées dans un même plan-image.

8. Afficheur tête-haute (10) selon l'une des revendications précédentes, dans lequel les première et seconde unités de génération d'images (11, 12) sont placées par rapport au filtre optique spectralement sélectif (19) de telle sorte que lesdites premières et deuxièmes images (Img1, Img2) sont formées dans deux plans-images distincts.

## Patentansprüche

1. Head-up-Display (10) für ein Kraftfahrzeug, umfassend:
- eine erste Bilderzeugungseinheit (11), die von einem Rechner (30) gesteuert wird, um erste Bilder (Img1) zu erzeugen,
- eine zweite Bilderzeugungseinheit (12), die von der ersten Bilderzeugungseinheit (11) verschieden ist und von einem Rechner (30) gesteuert wird, um zweite Bilder (Img2) zu erzeugen, und
- eine optische Bildprojektionsanordnung (18), die geeignet ist, die ersten und zweiten Bilder (Img1, Img2) gleichzeitig in das Sichtfeld des Fahrers des Kraftfahrzeugs zu projizieren, und die einen teilweise reflektierenden Spiegel umfasst, zu dessen beiden Seiten die ersten und zweiten Bilderzeugungseinheiten (11, 12) angeordnet sind, wobei der Spiegel ein spektral selektiver optischer Filter (19) ist, der geeignet ist, das Licht in mindestens einer ersten Wellenlänge (λ₁) überwiegend zu reflektieren und das Licht in mindestens einer zweiten Wellenlänge (λ₄), die von der ersten Wellenlänge (λ₁) verschieden ist, überwiegend zu transmittieren, und wobei:
- die erste Bilderzeugungseinheit (11) mindestens eine monochromatische Lichtquelle (13) umfasst, die nur in der ersten oder in der zweiten Wellenlänge (λ₁, λ₄) emittiert,
- die zweite Bilderzeugungseinheit (12) geeignet ist, ein Lichtbündel in einem Wellenlängenbereich (Δλ) zu erzeugen, der die zweite oder die erste Wellenlänge (λ₁, λ₄) umfasst, und
- der spektral selektive optische Filter (19) geeignet ist, das Licht in einem überwiegenden Teil des Wellenlängenbereichs (Δλ) zu transmittieren oder zu reflektieren
und wobei die erste Bilderzeugungseinheit (11) ein Laserscanner ist, der mindestens eine Laserdiode umfasst, die eine Wellenlänge (λ₁, λ₄) emittiert, die in dem Wellenlängenbereich (Δλ) enthalten ist.

2. Head-up-Display (10) nach dem vorhergehenden Anspruch, wobei der Laserscanner drei Laserdioden umfasst, die geeignet sind, in drei verschiedenen Wellenlängen (λ₁, λ₂, λ₃), darunter die erste oder die zweite Wellenlänge (λ₁, λ₄), zu emittieren.

3. Head-up-Display (10) nach einem der vorhergehenden Ansprüche, wobei die zweite Bilderzeugungseinheit (12) einen Anzeigebildschirm umfasst.

4. Head-up-Display (10) nach einem der vorhergehenden Ansprüche, wobei der spektral selektive optische Filter (19) ein dichroitischer Spiegel ist.

5. Head-up-Display (10) nach einem der vorhergehenden Ansprüche, wobei der spektral selektive optische Filter (19), für die erste Wellenlänge (λ₁), einen Reflexionskoeffizienten größer oder gleich 90 %, bevorzugt größer als 95 %, am besten größer als 99 % aufweist.

6. Head-up-Display (10) nach einem der vorhergehenden Ansprüche, wobei der spektral selektive optische Filter (19), für die zweite Wellenlänge (λ₄), einen Transmissionskoeffizienten größer oder gleich 90 %, bevorzugt größer als 95 %, am besten größer als 99 % aufweist.

7. Head-up-Display (10) nach einem der vorhergehenden Ansprüche, wobei die ersten und zweiten Bilderzeugungseinheiten (11, 12) in Bezug auf den spektral selektiven optischen Filter (19) so positioniert sind, dass die ersten und zweiten Bilder (Img1, Img2) in einer selben Bildebene gebildet werden.

8. Head-up-Display (10) nach einem der vorhergehenden Ansprüche, wobei die ersten und zweiten Bilderzeugungseinheiten (11, 12) in Bezug auf den spektral selektiven optischen Filter (19) so positioniert sind, dass die ersten und zweiten Bilder (Img1, Img2) in zwei verschiedenen Bildebenen gebildet werden.

## Claims

1. Head-up display (10) for a motor vehicle, said head-up display comprising:
- a first image-generating unit (11) controlled by a computer (30) for generating first images (Img1),
- a second image-generating unit (12), distinct from the first image-generating unit (11) and controlled by a computer (30) for generating second images (Img2), and
- an image-projecting optical assembly (18), which is configured to concomitantly project the first and second images (Img1, Img2) into the field of view of the driver of the motor vehicle and which comprises a partially reflective mirror, on either side of which are placed the first and second image-generating units (11, 12), wherein said mirror is a spectrally selective optical filter (19) configured to predominantly reflect light at least at a first wavelength (λ₁), and to predominantly transmit light at least at a second wavelength (λ₄)distinct from said first wavelength (λ₁), and wherein:
- the first image-generating unit (11) comprises at least one monochromatic light source (13), which emits only at said first or said second wavelength (λ₁, λ₄), respectively,
- the second image-generating unit (12) is configured to generate a light beam in a wavelength band (Δλ) that contains said second or said first wavelength (λ₁, λ₄), respectively, and
- said spectrally selective optical filter (19) is configured to transmit or reflect, respectively, light in most of said wavelength band (Δλ),
and wherein said first image-generating unit (11) is a laser scanner that comprises at least one laser diode emitting a wavelength (λ₁, λ₄) comprised in the wavelength band (Δλ).

2. Head-up display (10) according to the preceding claim, wherein the laser scanner comprises three laser diodes configured to emit at three distinct wavelengths (λ₁, λ₂, λ₃), including said first or second wavelength (λ₁, λ₄) respectively.

3. Head-up display (10) according to one of the preceding claims, wherein said second image-generating unit (12) comprises a display screen.

4. Head-up display (10) according to one of the preceding claims, wherein said spectrally selective optical filter (19) is a dichroic mirror.

5. Head-up display (10) according to one of the preceding claims, wherein said spectrally selective optical filter (19) has, at said first wavelength (λ₁), a reflection coefficient greater than or equal to 90%, preferably greater than 95%, and better still greater than 99%.

6. Head-up display (10) according to one of the preceding claims, wherein said spectrally selective optical filter (19) has, at said second wavelength (λ₄), a transmission coefficient greater than or equal to 90%, preferably greater than 95%, and better still greater than 99%.

7. Head-up display (10) according to one of the preceding claims, wherein the first and second image-generating units (11, 12) are placed with respect to the spectrally selective optical filter (19) such that said first and second images (Img1, Img2) are formed in the same image plane.

8. Head-up display (10) according to one of the preceding claims, wherein the first and second image-generating units (11, 12) are placed with respect to the spectrally selective optical filter (19) such that said first and second images (Img1, Img2) are formed in two distinct image planes.
